# EUROPÄISCHE PATENTSCHRIFT

(11) **EP 4 582 743 B1**
(45) Veröffentlichungstag und Bekanntmachung des Hinweises auf die Patenterteilung: **29.04.2026**
(21) Anmeldenummer: 25170284.1
(22) Anmeldetag: 02.04.2024
(51) Int. Cl.: G01K 1/024, G01K 1/02, F24C 7/08

(54) **LEBENSMITTELAUFNAHMEGERÄT**
DEVICE FOR RECEIVING FOOD
APPAREIL POUR RECEVOIR DES ALIMENTS

(30) Priorität: 04.04.2023 DE 102023108548
(43) Veröffentlichungstag der Anmeldung: 09.07.2025
(62) Teilanmeldung aus: 24168090.9
(73) Patentinhaber: WELBILT Deutschland GmbH, 82436 Eglfing (DE)
(72) Erfinder: WILD, Hannes, 82418 Riegsee (DE); SIEBERT, Sebastian, 83115 Neubeuern (DE)
(74) Vertreter: Hoefer & Partner Patentanwälte mbB

(56) Entgegenhaltungen:
- CN-U- 218 355 832
- US-A1- 2019 339 133

## Beschreibung

Die vorliegende Erfindung betrifft ein Lebensmittelaufnahmegerät.

In Küchen, insbesondere Gastronomieküchen, stehen oftmals mehrere Thermometer für die Kerntemperaturmessung der Lebensmittel bereit. Dabei könne Thermometer eingesetzt werden, die nicht über ein Kabel mit dem jeweiligen Gargerät verbunden sind, sondern per Funk die Kerntemperatur an das Gargerät senden. Um mehrere Thermometer voneinander zu unterscheiden, sind diese beispielsweise mit Buchstaben oder Zahlen gekennzeichnet. Bei der Verwendung des Thermometers, wird dieses in das Lebensmittel eingesteckt und das Lebensmittel samt eingestecktem Thermometer wird in das Gargerät eingesetzt. Der Benutzer muss dabei am Gargerät auswählen, welches Thermometer er verwendet hat, sodass das Gargerät von eben diesem Thermometer die Kerntemperatur anzeigt bzw. überwacht. Dieser Vorgang ist mit entsprechendem Aufwand verbunden und ist fehleranfällig, da beispielsweise das falsche Thermometer durch den Bediener ausgewählt werden kann.

CN 218 355 832 U offenbart ein Gerät nach dem Oberbegriff des Anspruchs 1.

Es ist Aufgabe vorliegender Erfindung, ein bedienerfreundliches Lebensmittelaufnahmegerät anzugeben. Ferner offenbart**,** aber nicht zum Anspruchsgegenstand gehörend, ist ein Verfahren zur Handhabung von Lebensmitteln, dass bedienerfreundlich und sicher durchgeführt werden kann. Die Lösung dieser Aufgabe erfolgt durch die Merkmale des Anspruchs 1. Die abhängigen Ansprüche haben bevorzugte Weiterbildungen der Erfindung zum Gegenstand.

Offenbart ist ein Verfahren zur Handhabung von Lebensmitteln, dass zumindest die folgenden Schritte umfasst.

Zunächst erfolgt das Bereitstellen mehrerer Thermometer. Bei dem einzelnen Thermometer handelt es sich insbesondere um einen Gegenstand, der in ein Lebensmittel eingesteckt werden kann. Hierzu weist das einzelne Thermometer beispielsweise einen Griff auf, von dem sich ein Stab bis zu einer Spitze erstreckt. Das Thermometer umfasst zumindest einen Kerntemperatur-Sensor und einen Außentemperatur-Sensor. Die beiden Sensoren sind innerhalb des jeweiligen Thermometers so angeordnet, dass sich - wenn das Thermometer in ein Lebensmittel eingesteckt ist - der zumindest eine Kerntemperatur-Sensor weiter im Inneren des Lebensmittels befindet als der Außentemperatur-Sensor. Wie im Folgenden erläutert wird, soll der Außentemperatur-Sensor möglichst schnell die Temperatur eines "Aufnahmeraums" des Lebensmittels annehmen bzw. messen. Deshalb ist insbesondere vorgesehen, dass der Außentemperatur-Sensor so angeordnet ist, dass er sich im eingesteckten Zustand des Thermometers außerhalb des Lebensmittels befindet, wozu dieser Sensor vorzugsweise im Griff des Thermometers angeordnet ist. Allerdings kann der Außentemperatur-Sensor auch geringfügig im Inneren des Lebensmittels angeordnet sein und dabei relativ schnell die Temperatur des Aufnahmeraums erfassen.

Jedes Thermometer weist vorzugsweise einen spezifischen Identifikator auf. Dieser Identifikator ist in einer Elektronikeinheit des Thermometers hinterlegt.

Des Weiteren erfolgt ein Bereitstellen zumindest eines Lebensmittels, in dem eines der mehreren Thermometer steckt. Dieses eine Thermometer wird im Folgenden als "eingestecktes Thermometer" bezeichnet. Wie beschrieben, befindet sich der Kerntemperatur-Sensor des eingesteckten Thermometers weiter im Inneren des Lebensmittels als der Außentemperatur-Sensor. Insbesondere befindet sich der Außentemperatur-Sensor außerhalb des Lebensmittels.

Ferner erfolgt ein fortdauerndes Messen einer Außentemperatur mit dem Außentemperatur-Sensor der mehreren Thermometer. Wie noch beschrieben wird, erfolgt vorzugsweise auch ein fortdauerndes Messen der Kerntemperatur mit dem Kerntemperatur-Sensor. Darüber hinaus erfolgt ein fortdauerndes kabelloses Übertragen der Außentemperatur, vorzugsweise auch der Kerntemperatur, zusammen mit dem Identifikator des jeweiligen Thermometers an eine Steuereinheit.

Der Ausdruck "fortdauernd" im Zusammenhang mit dem Messen der Temperaturen und dem kabellosen Übertragen beschreibt, dass dieser Vorgang nicht nur einmalig sondern mehrmalig stattfindet. Insbesondere ist vorgesehen, dass die Thermometer die Temperaturen in regelmäßigen Abständen (beispielsweise von Millisekunden oder Sekunden) messen und kabellos übertragen. Allerdings schließt der Ausdruck "fortdauernd" nicht aus, dass solch ein Messen und/oder Übertragen einzelner Thermometer oder aller Thermometer auch unterbrochen werden kann. Beispielsweise können sich die Thermometer in einer Ladestation befinden und dabei weder messen noch übertragen, da ohnehin feststeht, dass das momentan aufzuladende Thermometer nicht in Benutzung ist. Ferner ist es beispielsweise möglich, dass die Thermometer in einen Ruhezustand übergehen und dabei nicht messen und/oder nicht übertragen. Die Thermometer umfassen bevorzugt einen internen Speicher, in dem zum Beispiel die gemessenen Temperaturwerte speicherbar sind. Dieser interne Speicher wird insbesondere genutzt, wenn die Funkverbindung zu einem Empfangsmodul abbricht. Das kabellose übertragen der Daten kann fortgesetzt werden, sobald wieder eine Verbindung zum Empfangsmodul aufgebaut werden kann.

Darüber hinaus ist bevorzugt vorgesehen, dass das Thermometer erst mit dem Übertragen beginnt, wenn es einen Unterschied zwischen seiner Kerntemperatur und seiner Außentemperatur erkennt. Es ist nämlich in den allermeisten Anwendungsfällen davon auszugehen, dass - wenn das Thermometer in das Lebensmittel eingesteckt wird - sich relativ schnell ein Unterschied zwischen der gemessenen Kerntemperatur und der gemessenen Außentemperatur einstellt und dadurch erkannt werden kann, dass das Thermometer benutzt wird. Durch diese Verhalten kann die Akkulaufzeit der Thermometer erhöht werden.

Wie beschrieben, erfolgt das Übertragen der gemessenen Temperaturen zusammen mit dem Identifikator "kabellos" zu einer Steuereinheit. Für diese kabellose Übertragung ist insbesondere eine Nahfeldkommunikation, wie beispielsweise Bluetooth, vorgesehen.

Die Steuereinheit kann ein Modul oder mehrere, an unterschiedlichen Orten positionierte Module umfassen. Wie im Rahmen der erfindungsgemäßen Anordnung noch detailliert beschrieben wird, umfasst die Steuereinheit insbesondere zumindest ein Empfangsmodul; an dieses Empfangsmodul senden die Thermometer.

Ferner erfolgt im Rahmen des Verfahrens ein "Überführen" des Lebensmittels samt dem eingesteckten Thermometer von einem ersten Aufnahmeraum in einen zweiten Aufnahmeraum. Bei dem "Aufnahmeraum" kann es sich um ein "Zimmer" eines Gebäudes handeln, beispielsweise eine Küche oder einen Lagerraum, Kühlraum oder Gefrierraum. Darüber hinaus kann der Aufnahmeraum durch ein Gerät gebildet sein; diese Art von Geräten werden vorliegend als Lebensmittelaufnahmegeräte bezeichnet. Solch ein Lebensmittelaufnahmegerät ist beispielsweise ein Gargerät, insbesondere Kombidämpfer, ein Warmhaltegerät, ein Schnellkühler, ein Schockfroster, ein Kühlschrank oder Gefrierschrank. Dabei ist vorgesehen, dass das Lebensmittelaufnahmegerät einen Aufnahmeraum bildet, in den ein Lebensmittel überführt werden kann.

Im Folgenden werden die Bezeichnungen "erster Aufnahmeraum" und "zweiter Aufnahmeraum" verwendet. Der erste Aufnahmeraum ist dabei stets derjenige Aufnahmeraum, indem sich das Lebensmittel mit eingestecktem Thermometer zunächst befindet und der zweite Aufnahmeraum ist derjenige Aufnahmeraum, in den das Lebensmittel mit eingestecktem Thermometer überführt wird. Wird beispielsweise ein Hähnchen mit eingestecktem Thermometer in ein Gargerät gesteckt, so handelt es sich um eine Überführung aus dem ersten Aufnahmeraum "Küche" in den zweiten Aufnahmeraum, der auch als "Garraum" des Gargerätes bezeichnet werden kann.

Der erste Aufnahmeraum weist eine erste Aufnahmeraumtemperatur auf. Der zweite Aufnahmeraum weist eine zweite Aufnahmeraumtemperatur auf. Diese beiden Aufnahmeraumtemperaturen unterscheiden sich voneinander. Wird also das Lebensmittel mit eingestecktem Thermometer vom ersten Aufnahmeraum in den zweiten Aufnahmeraum überführt, so ändert sich auch relativ schnell die Außentemperatur, gemessen mit dem Außentemperatur-Sensor des eingesteckten Thermometers. Diese Erkenntnis wird im Folgenden ausgenutzt, um zu ermitteln, welches der mehreren Thermometer in dem Lebensmittel steckt bzw. welches der mehreren Thermometern verwendet wird.

So erfolgt im Verfahren folgender Schritt, bezeichnet als "Thermometerzuordnung": Zuordnen, welches der mehreren Thermometer als "eingestecktes Thermometer", zusammen mit dem Lebensmittel überführt wurde. Diese Zuordnung erfolgt mittels der Steuereinheit und basiert auf der gemessenen Außentemperatur der mehreren Thermometer. Für die Thermometerzuordnung wertet die Steuereinheit, insbesondere fortdauernd, aus, ob sich eine der Außentemperaturen der mehreren Thermometer verändert. Wenn beispielsweise die Außentemperatur eines Thermometers von Raumtemperatur (z.B. 21°C) auf über 80°C ansteigt, und die Außentemperatur alle anderen Thermometer im Wesentlichen gleichbleibt, kann die Steuereinheit darauf schließen, dass dieses eine Thermometer nun benutzt wird und sich somit in einem Lebensmittel befindet, dass gerade in ein Gargerät überführt wird.

Eine ähnliche Situation kann sich bei folgender Betrachtung ergeben: angenommen alle verwendeten Thermometer in einer Küche stecken in Lebensmitteln und befinden sich im Aufnahmeraum eines Gargerätes. Dabei übermitteln die Thermometer an die Steuereinheit jeweils Außentemperaturen die wesentlich über beispielsweise 80°C liegen. Sobald eines der Lebensmittel mit eingesteckten Thermometer aus dem Gargerät entnommen wird, sinkt die Außentemperatur des zugehörigen Thermometers ab wohingegen die Außentemperatur aller anderen Thermometer im Wesentlichen gleichbleibt. So kann die Steuereinheit erkennen, welches Thermometer zusammen mit dem Lebensmittel überführt wurde; wobei in diesem Fall das Gargerät den ersten Aufnahmeraum bildet und die Küche den zweiten Aufnahmeraum darstellt.

In bevorzugter Ausführung ist vorgesehen, dass nicht nur eine Thermometerzuordnung, sondern auch eine Aufnahmeraumzuordnung erfolgt. Diese Aufnahmeraumzuordnung kann grundsätzlich gleichzeitig mit der Thermometerzuordnung erfolgen, oder nach der Thermometerzuordnung durchgeführt werden. Für die Aufnahmeraumzuordnung sind grundsätzlich zwei unterschiedliche Varianten vorgesehen, die jedoch auch beide durchgeführt werden können, um dabei durch eine Variante das Ergebnis der anderen Variante zu verbessern bzw. zu validieren:
(A) Die erste Variante wird als "erste Aufnahmeraumzuordnung" bezeichnet. Dabei erfolgt ein Zuordnen, in welchen Aufnahmeraum das eingesteckte Thermometer zusammen mit dem Lebensmittel überführt wurde, basierend auf der gemessenen Außentemperatur des eingesteckten Thermometers. Auch diese Zuordnung erfolgt mittels der Steuereinheit.

Nachdem zugeordnet wurde, welches Thermometer das "eingesteckte Thermometer" ist, kann die Änderung der Außentemperatur mittels der Steuereinheit genauer betrachtet werden. Steigt beispielsweise die Außentemperatur auf über 80°, so kann die Steuereinheit davon ausgehen, dass das Lebensmittel samt dem eingesteckten Thermometer in ein Gargerät überführt wurde. Wenn es mehrere Gargeräte in der Küchenumgebung gibt, kann das Steuergerät beispielsweise mitberücksichtigen, welches der Gargeräte aktiv ist oder in welchem der Gargeräte welche Aufnahmeraumtemperatur herrscht. Andererseits kann mittels der Steuereinheit auch erkannt werden, dass die Außentemperatur des eingesteckten Thermometers beispielsweise unter 0° abfällt, wodurch die Steuereinheit ohne weiteres darauf schließen kann, dass das Thermometer samt dem Lebensmittel in den Gefrierschrank überführt wurde.

Es versteht sich, dass die erste Aufnahmeraumzuordnung auch zeitgleich mit der Thermometerzuordnung erfolgen kann. Ist beispielsweise in der Steuereinheit hinterlegt, dass der Aufnahmeraum eines ersten Gargerätes auf 80°C aufgeheizt ist und der Aufnahmeraum eines zweiten Gargerätes auf 200°C aufgeheizt ist, so kann bei Überführen des Lebensmittels samt eingestecktem Thermometer in einen der beiden Aufnahmeräume unmittelbar erfasst werden, dass eben dieses Thermometer das "eingesteckte Thermometer" ist und gleichzeitig kann erfasst werden, in welchen der beiden Aufnahmeräume die Überführung erfolgt, nämlich in dem erkannt wird, ob die Außentemperatur auf etwa 80°C oder auf etwa 200°C ansteigt.

(B) Zusätzlich oder alternativ zur ersten Aufnahmeraumzuordnung kann mittels der Steuereinheit auch noch eine zweite Variante, bezeichnet als "zweite Aufnahmeraumzuordnung" berücksichtigt werden. Dabei erfolgt ein Zuordnen, in welchen Aufnahmeraum das eingesteckte Thermometer zusammen mit dem Lebensmittel überführt wurde, basierend auf zumindest einem der folgenden Punkte:
(i) Der jeweilige Aufnahmeraum kann eine Tür aufweisen. Beispielsweise befindet sich an einem Gargerät eine entsprechende Tür um den Garraum zu verschließen. Aber auch an einem Kühlschrank, einem Lagerraum, einem Kühlraum usw. befinden sich Türen, die geöffnet werden müssen, um ein Lebensmittel zu überführen. Im Rahmen des Verfahrens ist bevorzugt vorgesehen, dass eine Betätigung der jeweiligen Tür erkannt wird. Dies erfolgt beispielsweise mittels eines einfachen Schalters an der Tür. Die Steuereinheit kann solch eine Betätigung der Tür erkennen und diese Information nutzen, um den Aufnahmeraum zuzuordnen.

An folgendem Beispiel sei erklärt, wie die erste Aufnahmeraumzuordnung mit der zweiten Aufnahmeraumzuordnung kombiniert werden kann. Es sei angenommen, dass in der Küchenumgebung zwei Gargeräte stehen, die jeweils auf die gleiche Temperatur aufgeheizt sind. Des Weiteren gibt es einen Kühlschrank. An allen drei Geräten kann das Betätigen der Tür erkannt werden. Wird nun ein Lebensmittel relativ schnell aus dem Kühlschrank in eines der beiden Gargeräte überführt, so kann diese Überführung vom Kühlschrank in eines der beiden Gargeräte ohne weiteres anhand der Außentemperaturänderung des eingesteckten Thermometers erkannt werden. Da die Steuereinheit erkennt, dass die Tür nur eines der beiden Gargeräte geöffnet wurde, kann sicher darauf geschlossen werden, in welches Gargerät das Lebensmittel mit eingestecktem Thermometer überführt wird. Würde die Steuereinheit nur die Außentemperatur heranziehen, so könnte sie nicht ohne weiteres feststellen, in welches Gargerät überführt wurde. Würde andererseits die Steuereinheit nur die Betätigung der Türen an den beiden Gargeräten und am Kühlschrank erfassen, so könnte die Steuereinheit, ohne Berücksichtigung der gemessenen Außentemperatur, nicht ohne weiteres feststellen, ob das Lebensmittel nun in das Gargerät oder in den Kühlschrank überführt wurde. Dieses Beispiel soll zeigen, dass in Abhängigkeit der sehr unterschiedlichen Geräte, die in einer Küchenumgebung verwendet werden können, die erste Aufnahmeraumzuordnung oder die zweite Aufnahmeraumzuordnung oder aber eine Kombination beider Aufnahmeraumzuordnungen anzuwenden ist.

ii) Des Weiteren ist vorgesehen, dass für die zweite Aufnahmeraumzuordnung mittels einer Kamera im Übergangsbereich zwischen dem ersten Aufnahmeraum und dem zweiten Aufnahmeraum das Lebensmittel und/oder das eingesteckte Thermometer erfasst wird. Solch eine Kamera, beispielsweise im Bereich der Tür eines Gargerätes, kann erfassen, dass ein Lebensmittel überführt wird. Dabei kann die Steuereinheit vorzugsweise auch auswerten, ob in dem erfassten Lebensmittel ein Thermometer steckt und/oder um welches Lebensmittel es sich handelt.

iii) Darüber hinaus ist im Rahmen der zweiten Aufnahmeraumzuordnung bevorzugt vorgesehen, dass die Steuereinheit die Signalstärke auswertet, mit der die Thermometer die Daten übertragen. Dabei ist zu berücksichtigen, dass in der Steuereinheit eine relative Positionierung zwischen dem Empfangsmodul und den jeweiligen Aufnahmeräumen hinterlegt werden kann. Befindet sich beispielsweise ein Empfangsmodul unmittelbar an dem Gerät, dass den Aufnahmeraum bildet, so gibt eine relativ große Signalstärke, im Vergleich zu den Signalstärken anderer Thermometer, ein starkes Indiz dafür, dass das jeweilige Thermometer in eben diesen Aufnahmeraum überführt wurde oder aus diesem Aufnahmeraum herausgenommen wurde.

Bevorzugt ist vorgesehen, dass im Rahmen des Verfahrens mehr als zwei Aufnahmeräume für die Zuordnung des eingesteckten Thermometers zur Auswahl stehen. Wenn es sich lediglich um ein Lebensmittelaufnahmegerät (beispielsweise Gargerät) handelt, dass in einer Küche steht, so ist die Zuordnung der Aufnahmeräume relativ simpel, da lediglich eine Überführung von der Küche in das Lebensmittelaufnahmegerät und in Gegenrichtung erfolgen kann. Insbesondere wenn mehr als zwei Aufnahmeräume zur Verfügung stehen, beispielsweise zwei Lebensmittelaufnahmegeräte und die Küche, dann ist die beschriebene Aufnahmeraumzuordnung besonders vorteilhaft anzuwenden. Besonders bevorzugt berücksichtigt das Verfahren, dass zumindest drei, besonders vorzugsweise zumindest vier, Aufnahmeräume für die Zuordnung des eingesteckten Thermometers zur Auswahl stehen.

Für die Thermometerzuordnung und/oder für die erste Aufnahmeraumzuordnung ist vorzugsweise vorgesehen, dass mittels der Steuereinheit die gemessene Außentemperatur mit zumindest einem Außentemperatur-Referenzwert verglichen wird. Zusätzlich oder alternativ ist es möglich, dass mittels der Steuereinheit eine Änderungsrate der gemessenen Außentemperatur des jeweiligen Thermometers ermittelt wird und diese Änderungsrate mit zumindest einem Änderungsrate-Referenzwerts verglichen wird.

Im einfachsten Fall gibt es jeweils nur einen Referenzwert also z.B. einen Außentemperatur-Referenzwert oder einen Änderungsrate-Referenzwert. Wenn dieser Referenzwert überschritten wird oder unterschritten wird, kann darauf geschlossen werden, dass eben jenes Thermometer das "eingesteckte Thermometer" ist. Vorzugsweise, werden jedoch in der Steuereinheit mehrere dieser Referenzwerte verwendet; dabei können mehrere Außentemperatur-Referenzwerte und/oder mehrere Änderungsrat-Referenzwerte zur Anwendung kommen. Dadurch ist insbesondere eine wesentlich genauere erste Aufnahmeraumzuordnung möglich. Deshalb ist bevorzugt vorgesehen, dass der zumindest eine Außentemperatur-Referenzwert und/oder der zumindest eine Änderungsrate-Referenzwert jeweils einem bestimmten Aufnahmeraum zugeordnet ist/sind.

Der jeweilige Referenzwert, sei es der Außentemperatur-Referenzwert oder der Änderungsrate-Referenzwert, kann grundsätzlich als fester Wert in der Steuereinheit hinterlegt sein. Ist der jeweilige Referenzwert beispielsweise einem Kühlschrank, Gefrierschrank, Schnellkühler, Schockfroster usw. zugeordnet, so kann es ausreichen, wenn ein fester Wert für einen solchen Aufnahmeraum hinterlegt ist, da sich die Temperatur eines solchen Aufnahmeraums im Regelfall nur unwesentlich verändert. Beispielsweise kann ein Gefrierschrank stets auf -18°C eingestellt sein.

Darüber hinaus ist jedoch auch vorgesehen, dass der jeweilige Referenzwert von der Steuereinheit in Abhängigkeit der zugehörigen Aufnahmeraumtemperatur angepasst wird. Diese Aufnahmeraumtemperatur kann gemessen werden oder auf sonstige Weise ermittelt werden. Beispielsweise kann die Aufnahmetemperatur eines Garraums gemessen werden und an die Steuereinheit übermittelt werden. Allerdings kann es auch ausreichen, dass die eingestellte Temperatur (Soll-Temperatur) des Aufnahmeraums an die hier definierte Steuereinheit übermittelt wird. In beiden Fällen kann die Steuereinheit basierend auf dieser Information den Referenzwert entsprechend anpassen. Wird beispielsweise ein Gargerät auf 80°C vorgeheizt, so kann die Steuereinheit den zugehörigen Referenzwert auf beispielsweise 70°C setzen. Wenn an einem der Thermometer eine Außentemperatur von zumindest 70°C ermittelt wird, kann die Steuereinheit darauf schließen, dass dieses Thermometer zusammen mit einem Lebensmittel in den zugehörigen Aufnahmeraum überführt wurde.

Berücksichtigt man nicht nur die gemessene Außentemperatur, sondern die Änderungsrate der gemessenen Außentemperatur, so lässt sich in bestimmten Situationen eine sehr genaue und insbesondere schnelle Zuordnung durchführen. Ist beispielsweise ein Gargerät auf 80°C vorgeheizt und ein anderes Gargerät auf 200°C vorgeheizt, so kann nach einer gewissen Zeit, nach dem das Thermometer samt Lebensmittel überführt wurde, anhand der Außentemperatur festgestellt werden, in welchem der beiden Gargeräte sich das Lebensmittel samt Thermometer befindet. Um diesen Vorgang jedoch zu beschleunigen, kann die Änderungsrate der Außentemperatur beobachtet werden. Erfolgt eine Überführung in das kältere Gargerät (80°C), so steigt die gemessenen Außentemperatur am Thermometer langsamer an als bei einer Überführung in das heißere Gargerät (200°C). Dadurch kann noch vor Erreichen der endgültigen Außentemperatur am Thermometer erkannt werden, in welches der beiden Gargeräte überführt wurde.

Ferner wird vorzugsweise berücksichtigt, dass die Thermometerzuordnung und/oder die Aufnahmeraumzuordnung (erste Aufnahmeraumzuordnung und/oder zweite Aufnahmeraumzuordnung) erst gestartet wird/werden, wenn zumindest eine der folgenden Startvoraussetzungen vorliegt. Dadurch kann unnötiger Rechenaufwand in der Steuereinheit eingespart werden und es können Fehlzuordnungen vermieden werden:
(i) Erkennen einer Betätigung einer Tür an einem der Aufnahmeräume. Dabei wird berücksichtigt, dass es äußerst unwahrscheinlich ist, dass ein Lebensmittel überführt wird, wenn überhaupt keine Tür an einem der Aufnahmeräume betätigt wird.
(ii) Erfassen des Lebensmittels und/oder des eingesteckten Thermometers mittels einer Kamera im Übergangbereich zwischen dem ersten Aufnahmeraum und dem zweiten Aufnahmeraum. Diese Startvoraussetzung ist insbesondere Sinnvoll, wenn an alles Übergängen zwischen den Aufnahmeräumen in der jeweiligen Küchenumgebung solch eine Kamera zum Einsatz kommt. So kann erst dann mit der Zuordnung begonnen werden, wenn an einem der Übergänge eine Überführung eines Lebensmittels erkannt wird.
(iii) Erkennen eines Temperaturunterschieds zwischen der mit dem Kerntemperatursensor gemessenen Kerntemperatur und der Außentemperatur an einem der Thermometer. Dieses Erkennen kann sowohl innerhalb der Thermometer als auch innerhalb der Steuereinheit erfolgen. Beispielsweise kann das Thermometer selbst erkennen, ob solch ein Temperaturunterschied vorliegt und daraufhin eine entsprechende Nachricht an die Steuereinheit senden, dass nun mit der Zuordnung zu beginnen ist. Allerdings kann auch die Steuereinheit solch einen Temperaturunterschied zwischen Außentemperatur und Kerntemperatur des einzelnen Thermometers erkennen und daraufhin mit der Zuordnung starten. Es wird davon ausgegangen, dass ein Thermometer, dass nicht im Lebensmittel steckt in etwa die gleiche Kerntemperatur und Außentemperatur misst. Sobald das Thermometer eingesteckt wird, entsteht eine Temperaturdifferenz zwischen Kerntemperatur und Außentemperatur, da im Regelfall das Lebensmittel gekühlt ist und vor dem Überführen in einen anderen Aufnahmeraum sich in der Küchenumgebung befindet, sodass als Außentemperatur in etwa die Temperatur der Küche gemessen wird und als Kerntemperatur die wesentlich geringere Temperatur des gekühlten Lebensmittels.
(iv) Darüber hinaus ist es möglich, dass die Zuordnung erst startet, wenn der Benutzer eine Benutzereingabe ausführt. Diese Benutzereingabe kann an einer beliebigen Mensch-Maschine-Schnittstelle (MMS) erfolgen, die datentechnisch mit der Steuereinheit verbunden ist. Beispielsweise kann die MMS an dem Lebensmittelaufnahmegerät angeordnet sein, dass den zweiten Aufnahmeraum bildet. Wird beispielsweise das Lebensmittel in ein Gargerät überführt, so kann für diese Benutzereingabe die MMS des Gargerätes, also beispielsweise das Touch-Display am Gargerät, verwendet werden.

Darüber hinaus ist bevorzugt vorgesehen, dass die Thermometerzuordnung einem Benutzer angezeigt wird. Vorzugsweise hat der Benutzer dabei die Möglichkeit, die Thermometerzuordnung zu bestätigen und/oder zu ändern. Hierzu ist insbesondere vorgesehen, dass das jeweilige Thermometer zusätzlich zu dem beschriebenen Identifikator, der elektronisch übermittelt wird, auch eine sichtbare, individuelle Kennzeichnung (beispielsweise Zahl, Buchstabe oder Farbcode) aufweist. Dem Benutzer kann dadurch angezeigt werden, dass ein bestimmtes Thermometer zugeordnet wurde, beispielsweise das "rote" Thermometer. Daraufhin kann der Benutzer dies vorzugsweise bestätigen und/oder ändern.

In ähnlicher Weise ist bevorzugt vorgesehen, dass auch die Aufnahmeraumzuordnung einem Benutzer angezeigt wird und vorzugsweise durch den Benutzer bestätigbar und/oder änderbar ist.

Wie bereits beschrieben, ist vorzugsweise vorgesehen, dass mittels des Kerntemperatur-Sensors des eingesteckten Thermometers fortlaufend die Kerntemperatur gemessen wird und die Kerntemperatur zusammen mit dem Identifikator fortdauernd kabellos an die Steuereinheit übertragen wird.

Dies ermöglicht insbesondere die folgenden Ausgestaltungen des Verfahrens:
(i) Vorzugsweise werden die Kerntemperatur und der zugehörige Aufnahmeraum angezeigt. Das Anzeigen des zugehörigen Aufnahmeraums ist insbesondere dann von Interesse, wenn die Anzeige dieser Information nicht unmittelbar am Aufnahmeraum, beispielsweise am Gargerät, erfolgt, sondern an einer nicht gerätegebundenen MMS, beispielsweise einem Smartphone oder Tablet.
(ii) Darüber hinaus ist bevorzugt vorgesehen, dass die Kerntemperatur an einem Display, insbesondere MMS des Lebensmittelaufnahmegerätes, angezeigt wird, dass den zweiten Aufnahmeraum bildet. In diesem Fall muss der zugeordnete Aufnahmeraum nicht zwingend angezeigt werden, da dem Benutzer ohnehin klar ist, dass eben dieser Aufnahmeraum, an dem die Anzeige der Kerntemperatur erfolgt, als der richtige Aufnahmeraum zugeordnet wurde.
(iii) Darüber hinaus ist bevorzugt vorgesehen, dass in Abhängigkeit der Kerntemperatur die Temperatur des ersten Aufnahmeraums und/oder des zweiten Aufnahmeraums gesteuert wird. Der "erste Aufnahmeraum" ist dabei der Aufnahmeraum, aus dem das Lebensmittel entnommen wird. Wird beispielsweise erkannt, dass das Lebensmittel samt eingestecktem Thermometer aus einem Garraum entnommen wird, so kann automatisch die Temperatur dieses Garraums abgesenkt werden. In den meisten Anwendungsfällen wird jedoch in Abhängigkeit der Kerntemperatur die Temperatur des zweiten Aufnahmeraums gesteuert, nämlich desjenigen Aufnahmeraums, in den das Lebensmittel überführt wurde. Beispielsweise kann in Abhängigkeit der Kerntemperatur die Temperatur des Gargerätes mit zunehmendem Erreichen einer Sollkerntemperatur abgesenkt werden.
(iv) Darüber hinaus ist bevorzugt vorgesehen, dass in Abhängigkeit der Kerntemperatur eine Verweilzeit des Lebensmittels im zweiten Aufnahmeraum bestimmt, und vorzugsweise angezeigt, wird. So kann überwacht werden, dass das Lebensmittel nicht zu lange in dem zweiten Aufnahmeraum bleibt und insbesondere bei Erreichen der Kerntemperatur ein Ende der Verweilzeit angezeigt wird.
(v) Ferner ist bevorzugt vorgesehen, dass in Abhängigkeit der Kerntemperatur eine Warnung ausgegeben wird, wenn das Lebensmittel bei zu geringer Kerntemperatur überführt wird. So kann beispielsweise überwacht werden, dass ein Lebensmittel (beispielsweise Fisch oder Geflügel), nicht bei zu niedriger Kerntemperatur aus dem Gargerät entnommen wird.

Bevorzugt ist vorgesehen, dass zur Qualitätsüberwachung des Lebensmittels in der Steuereinheit die zeitliche Abfolge der Thermometerzuordnung und/oder Aufnahmeraumzuordnung (erste Aufnahmeraumzuordnung und/oder zweite Aufnahmeraumzuordnung), insbesondere auch die gemessenen Temperaturen, protokolliert wird/werden. Durch diese Qualitätsüberwachung und die Protokollierung der Messwerte und Zuordnungen kann die Kühlkette für das Lebensmittel mit eingestecktem Thermometer überwacht werden. Dabei ist vorzugsweise vorgesehen, dass diese Protokollierung über mehrere Überführungen hinweg erfolgt, insbesondere über zumindest zwei oder zumindest drei Überführungen. So wird beispielsweise protokolliert, während sich das Lebensmittel mit eingesteckten Thermometer in einem Kühlraum befindet, von diesem Kühlraum in die Küche überführt wird und von der Küche in das Gargerät überführt wird. Dieses Protokollieren kann bei der Einhaltung von HACCP-Richtlinien und EN-Normen für Lebensmittel unterstützen.

Ferner offenbart ist eine Anordnung zur Handhabung von Lebensmitteln. Diese Anordnung ist vorzugsweise zur Durchführung des Verfahrens, wie es vorab beschrieben wurde, ausgeführt. Insbesondere ist vorgesehen, dass die beschriebenen Ausgestaltungen des Verfahrens vorteilhafte Ausgestaltungen der Anordnung bilden.

Die Anordnung umfasst mehrere Thermometer. Wie beschrieben, weist jedes Thermometer einen für das Thermometer spezifischen Identifikator, zumindest einen Kerntemperatur-Sensor und einen Außentemperatur-Sensor auf.

Zusätzlich zu den Thermometern umfasst die Anordnung die Steuereinheit. Wie bereits beschrieben, ist diese Steuereinheit dazu ausgebildet, die Zuordnung durchzuführen, welches Thermometer als "eingestecktes Thermometer" zusammen mit einem Lebensmittel überführt wurde. Diese Zuordnung erfolgt basierend auf der gemessenen Außentemperatur der Thermometer und eben dann wenn eine Überführung des Lebensmittels samt dem eingesteckten Thermometer von einem ersten Aufnahmeraum in einen zweiten Aufnahmeraum stattfindet. Wie bereits beschrieben, unterscheiden sich diese beiden Aufnahmeräume in Ihren Aufnahmeraumtemperaturen.

Insbesondere für die Zuordnung des Thermometers und für die Zuordnung des Aufnahmeraums sei auf das bereits beschriebene Verfahren verwiesen. Die Steuereinheit der definierten Anordnung ist zur Durchführung dieser Zuordnungen, wie im Rahmen des Verfahrens beschrieben, bevorzugt ausgebildet.

Die Steuereinheit kann zumindest ein Empfangsmodul umfassen. Die Thermometer und das Empfangsmodul sind zur kabellosen Datenübertragung ausgebildet. Dabei erfolgt zumindest eine unidirektionale Datenübertragung, nämlich von den Thermometern zum Empfangsmodul. Für die Datenübertragung zwischen Thermometer und Empfangsmodul ist insbesondere eine Nahfeldkommunikation, beispielsweise Bluetooth, vorgesehen. Bevorzugt umfasst die Steuereinheit mehrere Empfangsmodule, die an unterschiedlichen Positionen angeordnet werden können.

Vorzugsweise befindet sich zumindest eines der Empfangsmodule in einem Lebensmittelaufnahmegerät. Das Empfangsmodul kann dabei vollständig oder teilweise im Inneren des Lebensmittelaufnahmegerätes angeordnet sein oder außen an dem Lebensmittelaufnahmegerät.

Des Weiteren kann die Steuereinheit ein Rechenmodul umfassen. Das Rechenmodul ist zur Durchführung der beschriebenen Zuordnungen ausgebildet. Das Rechenmodul kann räumlich aufgeteilt sein. So kann ein Teil des Rechenmoduls sich in der Küchenumgebung, insbesondere in einem der Lebensmittelaufnahmegeräte, befinden und ein anderer Teil des Rechenmoduls kann sich in einem Server oder einer Cloud befinden. Die unterschiedlichen Teile des Rechenmoduls sind dabei über ein entsprechendes Netzwerk, insbesondere das Internet, miteinander verbunden. Allerdings ist es auch möglich, dass das gesamte Rechenmodul lokal angeordnet ist, insbesondere in einem der Lebensmittelaufnahmegeräte integriert ist.

Insbesondere ist vorgesehen, dass die mehreren, vorzugsweise alle, Empfangsmodule direkt und/oder über ein Netzwerk miteinander verbunden sind, sodass die Thermometer an ein beliebiges - insbesondere das nächstliegende - Empfangsmodul übertragen können. So kann insbesondere ein Empfangsmodul an beliebiger Stelle, zum Beispiel in einem beliebigen Lebensmittelaufnahmegerät, als "Range extender" oder "Repeater", die Daten vom Thermometer empfangen und direkt oder über das Netzwerk an das Rechenmodul weiterleiten. Dieses Rechenmodul kann sich dabei in einem anderen Lebensmittelaufnahmegerät oder an sonstiger Stelle befinden.

Die Repeaterfunktion ermöglicht z.B. Folgendes: Befindet sich beispielsweise das Thermometer in einem Kühlschrank, der nicht ins Netzwerk eingebunden ist, kann über ein anderes Gerät in der Nähe, z. B. über einen Dämpfer mit Empfangsmodul, trotzdem das Thermometer seine Daten ins Netzwerk einspeisen.

Insbesondere durch die "Repeaterfunktion" ergibt sich die Möglichkeit eine Echtzeit-Überwachung (live) darzustellen. Man kann z.B. beliebig viele Geräte in der Küchenumgebung mit einbinden und so die Prozesse bzw. die von den Thermometern gesendeten Temperaturen nahtlos überwachen. Bei einer Abweichung zu einem geforderten Prozessablauf bzw. Temperatur (z.B. zu lange gelagerte Produkte, falsche Kerntemperatur, Türe des Kühlraums ist offen und Temperatur steigt an, etc.) kann eine Warnung auf den Geräten angezeigt werden. Auch ein eigener Monitor in der Küche, welcher für die Überwachung und Darstellung der Prozessabläufe installiert ist, kann eingebunden werden. Oder eine Hinweis-Nachricht auf einem mobilen Endgerät, wie z. B. Handy des Küchenchefs etc., kann ausgegeben werden.

Ferner kann die Steuereinheit zumindest eine Mensch-Maschine-Schnittstelle, auch als MMS bezeichnet, umfassen. Diese MMS kann beispielsweise in das Lebensmittelaufnahmegerät integriert sein. Beispielsweise weist ein Gargerät ohnehin eine MMS (z.B. Touch-Display) auf, das auch für die Steuereinheit und somit für das beschriebene Verfahren genutzt werden kann.

Darüber hinaus kann allerdings auch ein tragbares Endgerät, wie beispielsweise ein Smartphone oder ein Tablet, oder eine sonstige Bedieneinheit, diese Mensch-Maschine-Schnittstelle der Steuereinheit bilden. Beispielsweise kann das tragbare Endgerät über ein beliebiges Netzwerk (Internet und/oder WLAN) mit dem Rechenmodul verbunden sein.

Darüber hinaus ist bevorzugt vorgesehen, dass die Steuereinheit zumindest ein Lebensmittelaufnahmegerät umfasst. Vorzugsweise umfasst die Steuereinheit mehrere Lebensmittelaufnahmegeräte. Jedes dieser Lebensmittelaufnahmegeräte bildet einen Aufnahmeraum, wie er im Rahmen des Verfahrens bereits definiert wurde. Das einzelne Lebensmittelaufnahmegerät ist vorzugsweise ausgebildet als: Gargerät, Warmhaltegerät, Schnellkühler, Schockfroster, Kühlschrank, Gefrierschrank, Kühlraum, Lagerraum oder Gefrierraum. Bevorzugt ist vorgesehen, dass die Steuereinheit zumindest zwei Empfangsmodule umfasst, wobei eines der Empfangsmodule angeordnet ist, um im Inneren eines der Lebensmittelaufnahmegeräte zu empfangen und das andere Empfangsmodul angeordnet ist, außerhalb dieses Lebensmittelaufnahmegerätes zu empfangen. Dabei wird insbesondere berücksichtigt, dass die Tür am Lebensmittelaufnahmegerät den Empfang zwischen Empfangsmodul und Thermometer relativ stark stören kann. Deshalb sollte sich, je nach Ausgestaltung der Lebensmittelaufnahmegeräte, sowohl im Aufnahmeraum als auch außerhalb des Aufnahmeraums jeweils zumindest ein Empfangsmodul befinden.

Die Erfindung umfasst ein Lebensmittelaufnahmegerät - vorzugsweise das vorab beschriebene Lebensmittelaufnahmegerät. Insbesondere ist das Lebensmittelaufnahmegerät zum Erwärmen oder Kühlen von Lebensmitteln ausgebildet. Das Lebensmittelaufnahmegerät ist beispielsweise ein Gargerät, insbesondere Kombidämpfer, ein Warmhaltegerät, ein Schnellkühler, ein Schockfroster, ein Kühlschrank oder Gefrierschrank. Das Lebensmittelaufnahmegerät umfasst eine integrierte Aufnahme zum Einsetzen von zumindest einem Thermometer, wobei die Aufnahme zum Aufladen eines Energiespeichers des zumindest einen Thermometers ausgebildet ist. Vorzugsweise ist die Aufnahme zum Einsetzen von mehreren, insbesondere zumindest zwei oder zumindest drei, Thermometern ausgebildet.

Die Aufnahme ist vorzugsweise zum Einsetzten von kabellos übertragenden Thermometern mit Kerntemperatur-Sensor ausgebildet.

Die Aufnahme ist vorzugsweise für ein wireless charging des zumindest einen Thermometers ausgebildet. Alternativ kann die Aufnahme auch elektrisch leitende Kontakte aufweisen, über die eine Stromübertragung zu dem zumindest einen Thermometer möglich ist.

Das Lebensmittelaufnahmegerät umfasst vorzugsweise eine Netzgerätanordnung mit zumindest einem Netzgerät. Die Netzgerätanordnung versorgt zumindest eine Vorrichtung des Lebensmittelaufnahmegerätes, die zum Erwärmen oder Kühlen des Lebensmittels dient. Die Aufnahme ist vorzugsweise ebenfalls an die Netzgerätanordnung angeschlossen, um mit der nötigen Energie zum Aufladen des/der Thermometer(s) versorgt zu werden.

Erfindungsgemäß umfasst das Lebensmittelaufnahmegerät eine Abdeckung, ausgebildet als schwenkbare Klappe, wobei die Aufnahme an der Innenseite der Abdeckung angeordnet ist. Die Abdeckung deckt vorzugsweise einen Raum im Gehäuse des Lebensmittelaufnahmegerätes ab. Weitere Einzelheiten, Vorteile und Merkmale der vorliegenden Erfindung ergeben sich aus nachfolgender Beschreibung eines Ausführungsbeispiels anhand der Zeichnungen. Es zeigt:
Fig. 1 eine erste Ansicht der offenbarten Anordnung zur Durchführung des offenbarten Verfahrens,
Fig. 2 eine Detailansicht eines Thermometers der offenbarten Anordnung zur Durchführung des offenbarten Verfahrens,
Fig. 3 eine weitere schematische Ansicht der offenbarten Anordnung zur Durchführung des offenbarten Verfahrens,
Fig. 4 und 5 zwei schematische Beispiele zur Durchführung der Zuordnung im Rahmen des offenbarten Verfahrens, und
Fig. 6 eine Aufnahme zum Aufladen von Thermometern eines erfindungsgemäßen Lebensmittelaufnahmegerätes gemäß einem Ausführungsbeispiel.

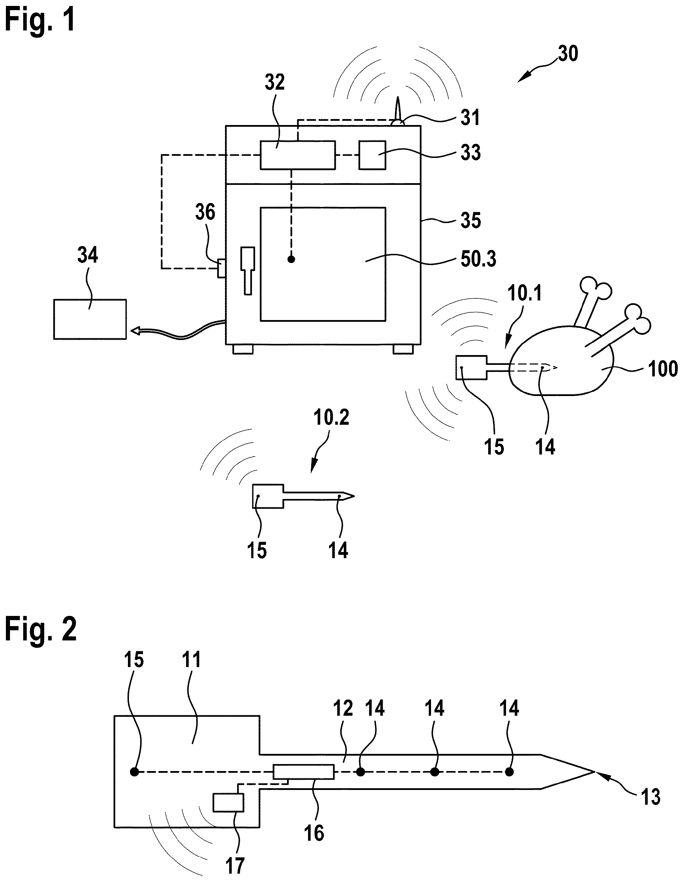

Im Folgenden wird anhand der Figuren 1 bis 5 eine Anordnung 1 zur Durchführung des offenbarten Verfahrens im Detail beschrieben.

Figuren 1 bis 3 verdeutlichen, dass die Anordnung 1 mehrere Thermometer 10 umfasst. Jedes Thermometer 10, wie insbesondere Figur 2 zeigt, weist einen Griff 11 auf, von dem sich ein Stab 12, insbesondere aus Metall, erstreckt. Der Stab 12 endet mit einer Spitze 13. Mit dieser Spitze 13 voran wird das Thermometer 10 in ein entsprechendes Lebensmittel 100 eingesteckt.

Das Thermometer 10 weist zumindest einen Kerntemperatur-Sensor 14 auf. Im gezeigten Ausführungsbeispiel können auch mehrere dieser Kerntemperatur-Sensoren 14 vorhanden sein. Ferner weist das Thermometer 10 einen Außentemperatur-Sensor 15, insbesondere im Bereich des Griffs 11, auf.

Im Inneren des Thermometers 10 befindet sich eine Elektronikeinheit 16, vorzugsweise verbunden mit einer nicht dargestellten Batterie. Die Elektronikeinheit 16 ist mit einer Sendeeinheit 17 verbunden. Die Elektronikeinheit 16 und die Sendeeinheit 17 sind dazu ausgebildet, die gemessenen Temperaturen der Kerntemperatur-Sensoren 14 und des Außentemperatur-Sensors 15 drahtlos zu senden. Das Thermometer 10 kann einen internen Speicher umfassen, in dem zum Beispiel die gemessenen Temperaturwerte speicherbar sind. Dieser interne Speicher wird insbesondere genutzt, wenn die Funkverbindung zum Empfangsmodul 31 abbricht. Das kabellose übertragen der Daten kann fortgesetzt werden, sobald wieder eine Verbindung zum Empfangsmodul 31 aufgebaut werden kann.

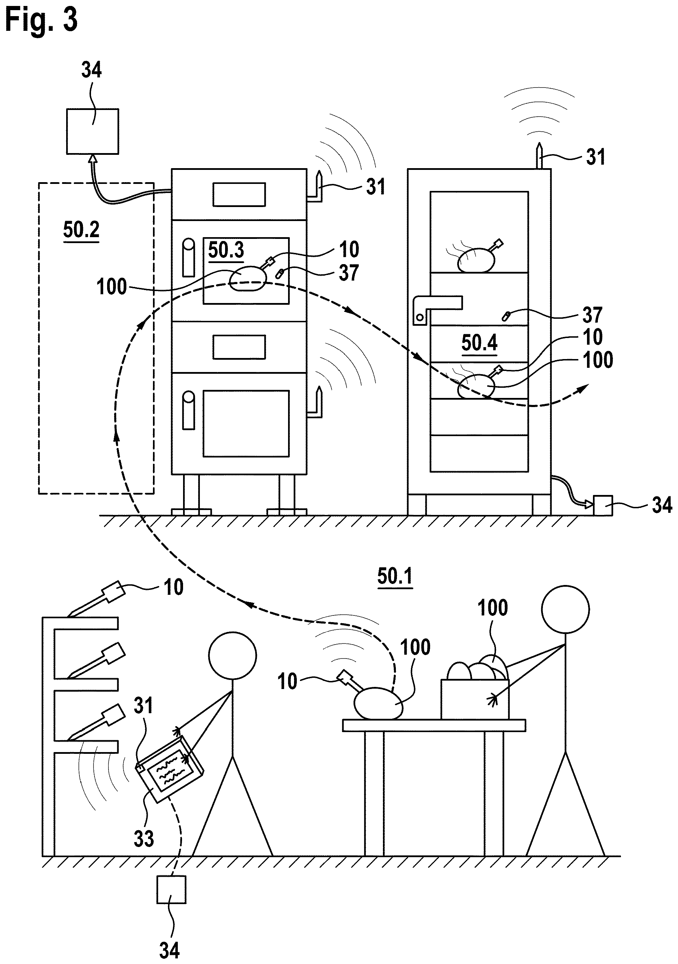

Ferner verdeutlichen insbesondere die Figuren 1 und 3, dass die Anordnung 1 eine Steuereinheit 30 umfasst. Diese Steuereinheit 30 kann mehrere Empfangsmodule 31 aufweisen. Die Empfangsmodule 31 empfangen die von der Sendeeinheit 17 der Thermometer 10 gesendeten Daten.

In der Elektronikeinheit 16 des jeweiligen Thermometers 10 ist ein spezifischer Identifikator, beispielsweise eine Nummer, hinterlegt. Die Sendeeinheit 17 sendet die gemessenen Temperaturen zusammen mit diesem Identifikator.

Die Steuereinheit 30 umfasst ferner ein Rechenmodul 32. Im gezeigten Ausführungsbeispiel befindet sich das Rechenmodul 32 in einem der Lebensmittelaufnahmegeräte 35. Allerdings zeigt die schematische Darstellung in den Figuren 1 und 3 auch eine Verbindung zu einem Server 34. Der Server 34 kann auch als Cloud bezeichnet werden. Die Verbindung zum Server 34 erfolgt über ein Netzwerk, beispielsweise das Internet. Dadurch ist es möglich, das Rechenmodul 32 vollständig oder teileweise in diesen Server 34 (Cloud) auszulagern.

Die Steuereinheit 30 umfasst mehrere Lebensmittelaufnahmegeräte 35, beispielsweise ein in Figuren 1 und 3 dargestelltes Gargerät oder ein in Figur 3 dargestelltes Warmhaltegerät. Weitere Beispiele für Lebensmittelaufnahmegeräte 35 sind im allgemeinen Teil der Beschreibung erläutert.

Figur 1 verdeutlicht rein schematisch, dass das Lebensmittelaufnahmegerät 35 einen Türschalter 36 aufweisen kann. Mit solch einem Türschalter 36 kann erfasst werden, ob die Tür des jeweiligen Lebensmittelaufnahmegerätes 35 betätigt wird.

Darüber hinaus kann die Steuereinheit 30 Aufnahmeraumtemperatur-Sensoren 37 aufweisen, die im jeweiligen Aufnahmeraum 50 die Temperatur messen.

Die Figuren 1 und 3 zeigen unterschiedliche Beispiele für Aufnahmeräume 50: So zeigt beispielsweise die untere Hälfte in Figur 3 einen Kühlraum 50.1 als Aufnahmeraum. In der oberen Hälfte der Figur 3 ist eine Küche 50.2 als Aufnahmeraum rein schematisch dargestellt. In dieser Küche 50.2 befindet sich ein erstes Lebensmittelaufnahmegerät 35 in Form eines Gargerätes. Dieses Gargerät bildet einen Garraum 50.3 als Aufnahmeraum. Rechts neben dem Gargerät befindet sich ein weiteres Lebensmittelaufnahmegerät 35 in Form eines Warmhaltegerätes. Dieses Warmhaltegerät bildet einen Warmhalteraum 50.4, der ebenfalls einen Aufnahmeraum darstellt.

Die Steuereinheit 30 kann, wie schematisch dargestellt, eine Mensch-Maschine-Schnittstelle 33 (MMS) umfassen. Beispielsweise kann ein ohnehin im Lebensmittelaufnahmegerät 35 vorhandenes Touchdisplay als solch eine MMS 33 verwendet werden, wie in Figur 1 dargestellt. Darüber hinaus zeigt Figur 3 rein beispielhaft, dass auch ein tragbares Endgerät, beispielsweise Tablet oder Smartphone, als MMS 33 zur Anwendung kommen kann. Figur 3 verdeutlicht dabei, dass die MMS 33 über ein drahtloses Netzwerk mit dem Server 34 und somit mit dem Rechenmodul 32 verbunden sein kann. Ferner ist schematisch dargestellt, dass auch ein Empfangsmodul 31 in diese MMS 33 integriert sein kann.

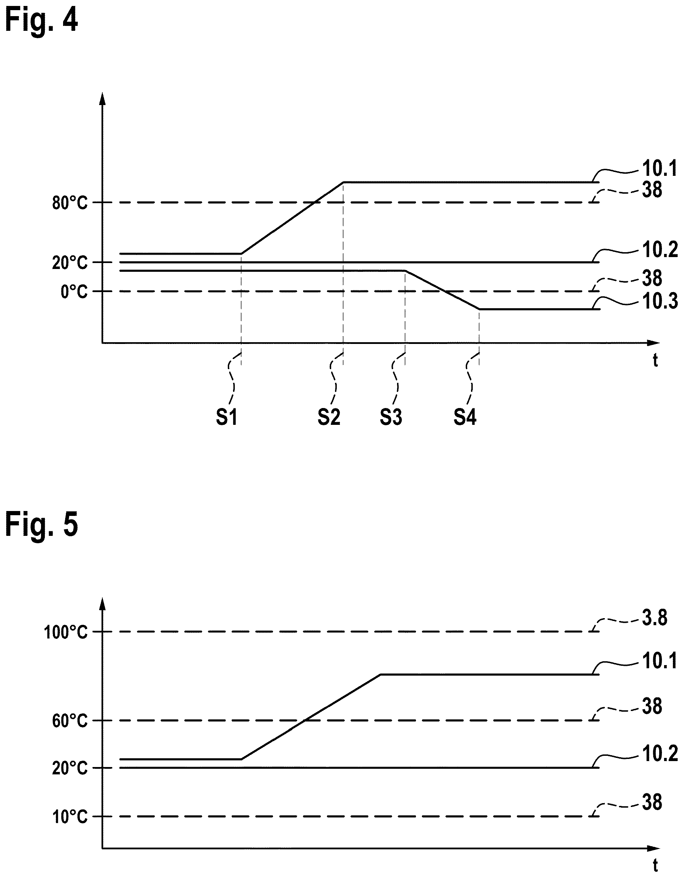

Wie im allgemeinen Teil der Beschreibung erläutert, können die Lebensmittel 100 mit eingestecktem Thermometer 10 zwischen diesen Aufnahmeräumen 50 überführt werden. Für die Beschreibung dieser Überführung und der Zuordnungen wird auf den allgemeinen Teil der Beschreibung verwiesen, der explizit auch Bestandteil dieses Ausführungsbeispiels ist. Im Folgenden wird anhand der Figuren 4 und 5 rein beispielhaft eine Thermometerzuordnung und eine Aufnahmeraumzuordnung beschrieben:

Figur 4 zeigt rein schematisch und stark vereinfacht den Verlauf der Außentemperatur von 3 Thermometern 10.1, 10.2 und 10.3 über der Zeit. Des Weiteren sind in Figur 4 zwei Außentemperatur-Referenzwerte 38 eingezeichnet.

Figur 4 verdeutlicht für das Thermometer 10.1, dass dieses eine Änderung der gemessenen Außentemperatur von ca. 20°C auf über 80°C erfährt. Dabei überschreitet die Außentemperatur des Thermometers 10.1 den oberen Außentemperatur-Referenzwert 38. Durch erkennen dieser Veränderung der Außentemperatur des Thermometers 10.1 kann die Steuereinheit 30 erkennen, dass eben jenes Thermometer als "eingestecktes Thermometer" zusammen mit einem Lebensmittel verwendet wird. Versuche haben gezeigt, dass ein Anstieg der Außentemperatur in einem Bereich von 0,5K-2K pro Sekunde stattfindet, sodass eine schnelle und somit benutzerfreundliche Zuordnung möglich ist.

Figur 4 zeigt rein schematisch die erkannten Schaltzustände S1 und S2 des Türschalters 36. Demgemäß kann anhand von S1 und S2 erkannt werden, dass die Tür des vorgeheizten Gargerätes zunächst geöffnet und dann wieder geschlossen wird. Diese Information kann für die Zuordnung oder für eine Verifikation einer Zuordnung genutzt werden.

Einen ähnlichen Vorgang zeigt Figur 4 rein beispielhaft für das Thermometer 10.3. Hier erfolgt die Verwendung des Thermometers 10.3 als eingestecktes Thermometer im Zusammenhang mit der Überführung des Lebensmittels 100 beispielsweise von der Küche 50.2 in einen Gefrierschrank.

Figur 4 zeigt rein schematisch die erkannten Schaltzustände S3 und S4 des Türschalters 36. Demgemäß kann anhand von S3 und S4 erkannt werden, dass die Tür des Gefrierschranks zunächst geöffnet und dann wieder geschlossen wird. Diese Information kann für die Zuordnung oder für eine Verifikation einer Zuordnung genutzt werden.

So verdeutlicht Figur 4, dass eine Thermometerzuordnung durch die einfache Verwendung von Außentemperatur-Referenzwerten 38 erfolgen kann.

Figur 5 verdeutlicht, dass gleichzeitig oder getrennt von der Thermometerzuordnung auch eine Aufnahmeraumzuordnung basierend auf der gemessenen Außentemperatur erfolgen kann. In Figur 5 sind drei Außentemperatur-Referenzwerte 38 eingezeichnet, beispielsweise bei 10°C, 60°C und 100°C. Im gezeigten Beispiel steigt die rein schematisch und stark vereinfacht dargestellte Außentemperatur des Thermometers 10.1 über den 60°C-Außentemperatur-Referenzwert, bleibt jedoch unterhalb des 100°C-Außentemperatur-Referenzwertes.

Der 60°C-Außentemperatur-Referenzwert kann beispielsweise dem Warmhalteraum 50.2 (siehe Figur 3) zugeordnet sein, wohingegen der 100°C-Außentemperatur-Referenzwert dem Garraum 50.3 (siehe Figur 3) zugeordnet sein kann. Bei Beobachtung der in Figur 5 dargestellten Änderung der gemessenen Außentemperatur des Thermometers 10.1 kann mittels der Steuereinheit darauf geschlossen werden, dass dieses Thermometer, nämlich 10.1 benutzt wird, und das dieses Thermometer in den Warmhalteraum 50.4 überführt wurde.

Es versteht sich, dass, wie im allgemeinen Teil der Beschreibung erläutert, die Referenzwerte an die Temperaturen der Aufnahmeräume 50 angepasst werden können. Darüber hinaus versteht sich, dass anstatt der in Figuren 4 und 5 gezeigten Verläufe der Außentemperatur auch Änderungsraten der gemessenen Außentemperaturen herangezogen werden können. Beispielsweise würde die Steigung der jeweiligen gemessenen Außentemperatur solch eine Änderungsrate angeben, die mit entsprechenden Änderungsrate-Referenzwerten zu Vergleichen ist, wie im allgemeinen Teil der Beschreibung erläutert.

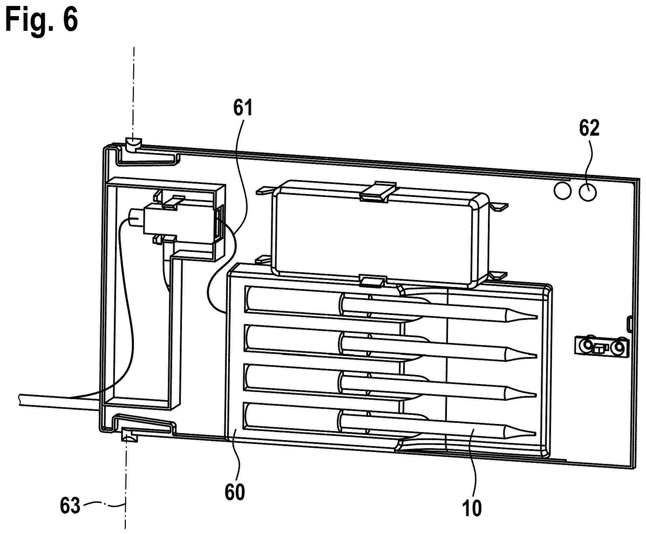

Figur 6 verdeutlicht, dass das Lebensmittelaufnahmegerät 35, wie es beispielsweise in Figur 1 gezeigt ist, eine integrierte Aufnahme 60 zum Einsetzten von zumindest einem der Thermometer 10 umfassen kann. Die Aufnahme 60 ist dabei zum Aufladen eines Energiespeichers des zumindest einen Thermometers 10 ausgebildet ist. Wie dargestellt ist die Aufnahme 60 zum Einsetzten und gleichzeitigen Laden von mehreren Thermometern 10 ausgebildet.

Das Lebensmittelaufnahmegerät 35 umfasst vorzugsweise eine nicht dargestellte Netzgerätanordnung mit zumindest einem Netzgerät. Die Netzgerätanordnung versorgt zumindest eine Vorrichtung des Lebensmittelaufnahmegerätes 35, die zum Erwärmen oder Kühlen des Lebensmittels 100 dient. Die Aufnahme 60 ist über eine schematisch dargestellte Kabelverbindung 61 an die Netzgerätanordnung angeschlossen, um mit der nötigen Energie zum Aufladen der Thermometer 10 versorgt zu werden. Figur 6 zeigt, dass das Lebensmittelaufnahmegerät 35 eine Abdeckung 62, ausgebildet als schwenkbare Klappe mit Schwenkachse 63, umfasst, wobei die Aufnahme 60 an der Innenseite der Abdeckung 62 angeordnet ist. Die Abdeckung 62 kann einen Raum des Gehäuses des Lebensmittelaufnahmegeräts 35 verschließen.

Neben der vorstehenden schriftlichen Beschreibung der Erfindung wird zu deren ergänzender Offenbarung hiermit explizit auf die zeichnerische Darstellung der Erfindung in den Figuren Bezug genommen.

### Bezugszeichenliste

- 1: Anordnung
- 10: Thermometer
- 11: Griff
- 12: Stab
- 13: Spitze
- 14: Kerntemperatur-Sensoren
- 15: Außentemperatur-Sensor
- 16: Elektronikeinheit
- 17: Sendeeinheit
- 30: Steuereinheit
- 31: Empfangsmodul
- 32: Rechenmodul
- 33: Mensch-Maschine-Schnittstelle (MMS)
- 34: Server
- 35: Lebensmittelaufnahmegerät
- 36: Türschalter
- 37: Aufnahmeraumtemperatur-Sensor
- 38: Außentemperatur-Referenzwert
- 50: Aufnahmeräume
- 50.1: Kühlraum
- 50.2: Küche
- 50.3: Garraum
- 50.4: Warmhalteraum
- 60: Aufnahme
- 61: Kabelverbindung
- 62: Abdeckung
- 63: Schwenkachse
- 100: Lebensmittel

## Patentansprüche

1. Lebensmittelaufnahmegerät (35), insbesondere ausgebildet zum Erwärmen oder Kühlen von Lebensmitteln, umfassend eine integrierte Aufnahme (60) zum Einsetzten von zumindest einem Thermometer (10), wobei die Aufnahme (60) zum Aufladen eines Energiespeichers des zumindest einen Thermometers (10) ausgebildet ist, **gekennzeichnet durch** eine Abdeckung (62), ausgebildet als schwenkbare Klappe, wobei die Aufnahme (60) an der Innenseite der Abdeckung (62) angeordnet ist.

2. Lebensmittelaufnahmegerät nach Anspruch 1, wobei ist die Aufnahme (60) zum Einsetzten von mehreren, insbesondre zumindest zwei oder zumindest drei, Thermometern ausgebildet ist.

3. Lebensmittelaufnahmegerät nach Anspruch 1 oder 2, wobei die Aufnahme (60) zum Einsetzten von kabellos übertragenden Thermometern (10) mit Kerntemperatur-Sensor (14) ausgebildet ist.

4. Lebensmittelaufnahmegerät nach einem der vorhergehenden Ansprüche, wobei die Aufnahme (60) für ein wireless charging des zumindest einen Thermometers (10) ausgebildet ist.

5. Lebensmittelaufnahmegerät nach einem der Ansprüche 1 bis 3, wobei die Aufnahme (60) elektrisch leitende Kontakte aufweist, über die eine Stromübertragung zu dem zumindest einen Thermometer (10) möglich ist.

6. Lebensmittelaufnahmegerät nach einem der vorhergehenden Ansprüche, wobei die Abdeckung (62) einen Raum im Gehäuse des Lebensmittelaufnahmegerätes (35) abdeckt.

7. Lebensmittelaufnahmegerät nach einem der vorhergehenden Ansprüche, umfassend eine Netzgerätanordnung mit zumindest einem Netzgerät, wobei die Netzgerätanordnung zumindest eine Vorrichtung des Lebensmittelaufnahmegerätes (35), die zum Erwärmen oder Kühlen des Lebensmittels dient, versorgt.

8. Lebensmittelaufnahmegerät nach Anspruch 7, wobei die Aufnahme (60) an die Netzgerätanordnung angeschlossen ist, um mit der nötigen Energie zum Aufladen des/der Thermometer(s) (10) versorgt zu werden.

9. Lebensmittelaufnahmegerät nach einem der vorhergehenden Ansprüche, wobei das Lebensmittelaufnahmegerät (35) ein Gargerät, insbesondere Kombidämpfer, ein Warmhaltegerät, ein Schnellkühler, ein Schockfroster, ein Kühlschrank oder Gefrierschrank ist.

## Claims

1. Food receiving device (35), in particular designed for heating or cooling food, comprising an integrated receiving means (60) for inserting at least one thermometer (10), wherein the receiving means (60) is designed for charging an energy storage means of the at least one thermometer (10), **characterized by** a cover (62) designed as a pivotable flap, wherein the receiving means (60) is arranged on the inner side of the cover (62).

2. Food receiving device according to Claim 1, wherein the receiving means (60) is designed for inserting a plurality of thermometers, in particular at least two or at least three thermometers.

3. Food receiving device according to Claim 1 or 2, wherein the receiving means (60) is designed for inserting wirelessly transmitting thermometers (10) with a core temperature sensor (14).

4. Food receiving device according to one of the preceding claims, wherein the receiving means (60) is designed for wireless charging of the at least one thermometer (10).

5. Food receiving device according to one of Claims 1 to 3, wherein the receiving means (60) has electrically conductive contacts, via which current transmission to the at least one thermometer (10) is possible.

6. Food receiving device according to one of the preceding claims, wherein the cover (62) covers a space in the housing of the food receiving device (35).

7. Food receiving device according to one of the preceding claims, comprising a power supply device arrangement having at least one power supply device, wherein the power supply device arrangement supplies at least one device of the food receiving device (35) which serves for heating or cooling the food.

8. Food receiving device according to Claim 7, wherein the receiving means (60) is connected to the power supply device arrangement in order to be supplied with the energy required for charging the thermometer(s) (10).

9. Food receiving device according to one of the preceding claims, wherein the food receiving device (35) is a cooking appliance, in particular a combination steamer, a warming appliance, a quick cooler, a shock freezer, a refrigerator or a freezer.

## Revendications

1. Appareil de réception d'aliments (35), en particulier conçu pour chauffer ou refroidir des aliments, comprenant un moyen de réception intégré (60) pour l'insertion d'au moins un thermomètre (10), le moyen de réception (60) étant conçu pour charger un accumulateur d'énergie de l'au moins un thermomètre (10), **caractérisé par** un couvercle (62) conçu comme un volet pivotant, le moyen de réception (60) étant disposé sur le côté intérieur du couvercle (62).

2. Appareil de réception d'aliments selon la revendication 1, le moyen de réception (60) étant conçu pour l'insertion de plusieurs thermomètres, en particulier d'au moins deux ou d'au moins trois thermomètres.

3. Appareil de réception d'aliments selon la revendication 1 ou 2, le moyen de réception (60) étant conçu pour l'insertion de thermomètres émetteurs sans fil (10) avec un capteur de température central (14).

4. Appareil de réception d'aliments selon l'une quelconque des revendications précédentes, le moyen de réception (60) étant conçu pour la charge sans fil de l'au moins un thermomètre (10).

5. Appareil de réception d'aliments selon l'une quelconque des revendications 1 à 3, le moyen de réception (60) présentant des contacts électriquement conducteurs, par le biais desquels une transmission de courant à l'au moins un thermomètre (10) est possible.

6. Appareil de réception d'aliments selon l'une quelconque des revendications précédentes, le couvercle (62) recouvrant un espace dans le boîtier de l'appareil de réception d'aliments (35).

7. Appareil de réception d'aliments selon l'une quelconque des revendications précédentes, comprenant un agencement d'appareil d'alimentation en énergie présentant au moins un appareil d'alimentation en énergie, l'agencement d'appareil d'alimentation en énergie alimentant au moins un appareil de l'appareil de réception d'aliments (35) qui sert à chauffer ou à refroidir les aliments.

8. Appareil de réception d'aliments selon la revendication 7, le moyen de réception (60) étant connecté à l'agencement d'appareil d'alimentation en énergie afin d'être alimenté avec l'énergie nécessaire pour la charge du ou des thermomètres (10).

9. Appareil de réception d'aliments selon l'une quelconque des revendications précédentes, l'appareil de réception d'aliments (35) étant un appareil de cuisson, en particulier un appareil à vapeur combiné, un appareil de réchauffage, un refroidisseur rapide, un congélateur à chocs, un réfrigérateur ou un congélateur.
